(19)

**Europäisches Patentamt**
**European Patent Office**
**Office européen des brevets**

(11)  **EP 4 490 107 B1**

(12)  **EUROPEAN PATENT SPECIFICATION**

(45) Date of publication and mention
of the grant of the patent:
**26.11.2025  Bulletin 2025/48**

(21) Application number: **23708512.1**

(22) Date of filing: **07.03.2023**

(51) International Patent Classification (IPC):
***C01G 45/12*** *(2025.01)*   ***C01G 53/00*** *(2025.01)*
***H01M 4/00*** *(2006.01)*

(52) Cooperative Patent Classification (CPC):
**C01G 53/50; C01G 45/1257; H01M 4/505;**
**H01M 4/525; H01M 10/0525;** C01P 2002/52;
H01M 4/485; H01M 2004/028; Y02E 60/10

(86) International application number:
**PCT/EP2023/055667**

(87) International publication number:
**WO 2023/170023 (14.09.2023 Gazette 2023/37)**

(54) **ELECTRODE MATERIAL**

ELEKTRODENMATERIAL

MATÉRIAU D'ÉLECTRODE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority:  **08.03.2022  EP 22382211**

(43) Date of publication of application:
**15.01.2025  Bulletin 2025/03**

(73) Proprietor: **Fundación Centro de Investigación**
**Cooperativa de**
**Energías Alternativas, CIC Energigune**
**Fundazioa**
**01510 Vitoria-Gasteiz, Álava (ES)**

(72) Inventors:
• **CABELLO BERMÚDEZ, Marta**
**01510 Vitoria-Gasteiz, Álava (ES)**
• **DREWETT, Nicholas**
**01510 Vitoria-Gasteiz, Álava (ES)**
• **VILLAVERDE OREJÓN, Aitor**
**01510 Vitoria-Gasteiz, Álava (ES)**

(74) Representative: **ABG Intellectual Property Law,**
**S.L.**
**Avenida de Burgos, 16D**
**Edificio Euromor**
**28036 Madrid (ES)**

(56) References cited:
**CN-A- 103 035 900    CN-A- 103 647 115**

**Description**

**FIELD OF THE INVENTION**

The present invention relates to an electrode material consisting of a lithium-rich manganese rich oxide compound doped with copper. The compound of the invention is particularly useful as cathode material in lithium-ion batteries.

**BACKGROUND**

Lithium ion batteries are found in almost any portable device powered with electricity, for instance in mobile phones, portable computers, etc. It is a known problem for these devices that the capacity of the batteries to deliver power decreases with an increasing number of charging cycles. In addition, the emergence of electric mobility has intensified the need for batteries able to: (i) deliver a large amount of power (high storage capacity) with a reduced volume of the battery, (ii) charge in a reduced amount of time and (iii) maintain a high charge capacity upon multiple cycles of charge/discharge. To this regard, electrode materials with high capacitance and able to provide similar degrees of performance after being submitted to a large number of charging cycles are in demand and are being the subject of intensive research.

In brief, lithium-ion and post-lithium ion batteries are made of a cathode and an anode that are separated by an electrolyte in charge of transporting $Li^+$ cations or other alkali cations such as $Na^+$. The cathode is generally made of metal oxides which undergo reversible RedOx reactions during the charging and discharging processes. $Li^+$ cations (or other alkali metal cations) move from the cathode to the anode during the charging process and from the anode to the cathode during the discharge process. When reaching an electrode, the cation is intercalated in the host material forming the electrode. Apart from said intercalation reaction, certain irreversible reactions could take place at the cathode, which lead to a decrease in the performance of the battery by altering the ability of this material to intercalate $Li^+$ or alkali cations. The performance of a cathode may vary depending on the composition of the cathode material, its structure in the solid state and its RedOx chemistry. The solid state structure will affect the ability of the material to intercalate lithium cations, while the RedOx chemistry is determinant to the mobility and release of lithium cations from the cathode.

Several cathode materials have thus been reported in the art. In particular, mixed metal oxides of lithium, manganese, cobalt and nickel are known in the art. Such materials are known as NMC materials, and have as general formula $LiNi_xMn_yCo_zO_2$ where the sum of x, y and z is generally about 1. Such materials may also contain a slight excess of lithium (Li-rich layered oxide materials) or other alkali metals, such as sodium or potassium. Such materials advantageously possess a similar structure to lithium cobalt oxide, most traditionally used in Li-ion batteries, combined with an optimal charge distribution over the surface. However, these materials typically suffer from structural instability and poor thermal characteristics.

Lithium-rich manganese-rich based layered oxide materials have been reported in the art for exhibiting high discharge capacity values. Such compounds are typically composites of two phases consisting of $Li_2MnO_3$ and an oxide of lithium, manganese cobalt and nickel in varying stoichiometry. For instance, Zhang and co-workers have reported a compound of formula $Li_{1.2}Mn_{0.54}Ni_{0.195}Co_{0.065}O_2$ exhibiting a capacity of 247 mAh per gram of material at 100 mA per gram after 50 cycles (L. Zhang, H. Wang, L. Wang *et al.* High electrochemical performance of lithium-rich $Li_{1.2}Mn_{0.54}Ni_x$-$Co_yO_2$ cathode materials for lithium-ion batteries, Mater. Lett., 185 (2016) 100-103). The authors are however silent about the value for the Initial Coulombic Efficiency (ICE) of such system. Such systems are known in the art to present some disadvantages, such as low ICE, weak capacity retention rate, low cyclability and low stability during cycling.

Several ways to modify lithium-rich manganese based layered oxide materials have been explored in the art in order to improve the performance of these materials as cathode materials for batteries. These methods include the development of new synthesis methods, the modification of the material surface or the doping of the material with other metals, such as Al, Ru, Mg, Ti, Zn, Zr and Cu. Patent specification EP2530767B1 discloses a positive electrode-active material comprising a composite oxide consisting in a lithium-rich manganese rich layered oxide material doped with aluminium. In particular, $LiMn_{0.7}Ni_{0.2}Co_{0.05}Al_{0.05}O_2$ is disclosed. A disclosed advantage of the disclosed doped Mn-rich lithium materials for batteries is that these materials can be charged at a voltage of up to 5 V. It was found however that the discharge capacity quickly dropped after carrying out several charging cycles. The above-mentioned material is reported to exhibit a discharge capacity for the first cycle of 228 mAh per gram.

Doping with copper of electroactive materials has also been reported in the art. In particular, Wu and co-workers disclose a compound of formula $Li[NiCo_{1-x}Cu_xMn]_{1/3}O_2$ where x = 0, 0.02, 0.04, 0.06 and 0.08 (Z.J.Wu, D. Wang, Z.F. Gao *et al.* Effect of Cu substitution on structures and electrochemical properties of $Li[NiCo_{1-x}Cu_xMn]_{1/3}O_2$ Dalton Trans., 2015,44, 18624-18631). It has been found that, when Ni is substituted with copper in the above material, the resulting discharge capacity decreases. For instance, the first discharge capacity of the compound where x is 0 is of 168 mAh per gram, whereas the first discharge capacity of a compound where x is 0.08 is of 159.9 mAh per gram. According to the authors, doping with copper leads to some $Ni^{2+}$ to be oxidized to $Ni^{3+}$ in order to maintain the overall neutrality, thereby

affecting the $Ni^{2+}/Ni^{4+}$ RedOx reaction which is crucial in the cathode operation, thereby impacting negatively on the cycling capacity of the electrode. Copper doping is also discussed as advantageously providing more stable electrode materials, which results in good degrees of capacity retention over charging cycles, at the expense of the loss in discharge capacity. Authors also mention that high amounts of copper (x=0.08) lead to deterioration of capacity attributed to cation mixing caused by the presence of excess copper.

In a similar approach, Sorboni and co-workers prepared Cu-doped $Li_{1.2}Mn_{0.5}Ni_{0.125}Co_{0.125}O_2$ (Sorboni, Y.; Arabi, H.; Kompany, A. Effect of Cu doping on the structural and electrochemical properties of lithium-rich $Li_{1.25}Mn_{0.50}Ni_{0.125}Co_{0.125}O_2$ nanopowders as a cathode material Ceramics International vol. 45 issue 2 part A, 2139-2145). The findings of the authors corroborate the findings of Wu and co-workers described above. Doping with copper is shown to enhance the capacity retention rate and stability of the electrode material over charging cycles at the expense of a loss of the discharge capacity observed for the undoped material. It is also described that high contents of copper in the material (for instance in $Li_{1.2}Mn_{0.5}Ni_{0.125}Co_{0.025}Cu_{0.1}O_2$) produces a fast deterioration of the discharge capacity after several charging cycles. The best performing disclosed material is the one having as formula $Li_{1.2}Mn_{0.5}Ni_{0.125}Co_{0.0725}Cu_{0.05}O_2$.

Patent application CN1030350900 discloses a cathode material for Li-ion batteries with general formula $Li[Li_d(Ni_aCo_bMn_cM_x)]O_2$ (M=Cu, Mg, Al, Y, Bi, Ti and/or Sn) wherein: $0.17 \leq a \leq 0.21$, $0.09 \leq b < 0.13$, $0.54 \leq c \leq 0.58$, $0.10 \leq d \leq 0.15$, $0 \leq x \leq 0.05$, $a+b+c+d+x=1$. In particular, the cathode material of formula $Li_{1.13}[Ni_{0.16}Cu_{0.01}Co_{0.10}Mn_{0.57}]O_2$ is disclosed. If compared with the analogous material undoped with copper, it was found that replacing a small amount of niquel with copper, such that the stoichiometry of copper is 0.01 in the cathode material, allows increasing the capacity of the cathode material.

Patent application CN103647115 discloses on the other hand a battery comprising a cathode based on a lithium-rich manganese-rich having as general formula $xLi_2MnO_3 \cdot (1-x)LiM(M'')O_2$, wherein $0<x<1$, M is a transition metal selected from Ni, Co, Mn, Fe, B Al, and V, and M'' is a doping element including Ti, Cr, Cu, Zn, Zr, Hf, Mo. According to the authors, these materials allow suppressing voltage decay. CN103647115 discloses in particular materials $0.2Li_2MnO_3 \cdot 0.8Li(Mn_{0.5}Ni_{0.48}Cu_{0.02})O_2$ and $0.8Li_2MnO_3 \cdot 0.2Li(Co_{0.15}Mn_{0.6}Ni_{0.2}Cu_{0.05})O_2$. However, the authors are silent on the effect of doping a lithium-rich manganese-rich material with copper.

Ma and co-workers further studied the effect of lithium content in the structure and electrochemical performance of a lithium-rich manganese-rich mixed oxide material of general formula $Li_{1+x}Mn_{0.7}Ni_{0.2}Co_{0.1}O_{2.25+x/2}$ where x = 0, 0.1, 0.2, 0.3, 0.4, 0.5, 0.6 and 0.7 (Ma, Q.; Yin, S.; Ding F. et al. Understanding effects of lithium content on structural and electrochemical characteristics of Li1+xMn0.7Ni0.2Co0.1O2.25+x/2 cathode materials for lithium-ion batteries Materials Science and Engineering: B, Volume 246 (2019) 143-152). In particular, a compound of formula $Li_{1.14}Mn_{0.68}Ni0.21Co_{0.11}O_2$ is disclosed. This compound was found to exhibit lower values of the first discharge capacity for its counterpart compound where x is 0.5. According to the authors, this is attributed to the presence of an impurity phase in the solid state. Said compound is reported as having a discharge capacity of about 100 mAh per gram at 0.1 C (1 C = 250 mA per gram), while exhibiting good capacity retention after 50 cycles. The authors are however silent on the possibility to dope this material with other metals, such as copper.

From what is disclosed in the art, it derives that there is still a need for providing improved materials for cathode batteries, exhibiting, among others, a high discharge capacity combined with a high capacity retention rate and high coulombic efficiency.

## SUMMARY OF THE INVENTION

After exhaustive research, the inventors have developed a lithium-rich manganese-rich layered oxide material doped with copper suitable for use as cathode materials in batteries and exhibiting high coulombic efficiency, high capacity gain, high energy density and high capacity retention rate. The compound of the invention is a composite material forming two phases and comprising a monoclinic phase consisting of $Li_2MnO_3$ and a trigonal phase consisting of a mixed metal oxide of an alkali metal M or a mixture thereof, manganese, nickel, cobalt and copper; providing a compound of formula (I)

$$Li_aM_{a'}Mn_bNi_xCo_yCu_zO_2 \qquad (I)$$

wherein a, a', b, x, y and z are as defined below.

The compound of the invention has a specific metal stoichiometry as defined below, such that the disadvantages associated to copper doping known in the art such as a decrease in the discharge capacity are surprisingly not observed. In particular, the compound of formula (I) unexpectedly exhibits higher discharge capacity than the equivalent undoped material. It is unexpected because the prior art teaches that copper doping induces a loss of discharge capacity of the material, which is presumably attributed in the art to a modification of the RedOx chemistry of the material caused by the introduction of copper. In addition, when the compound of the invention comprises large amounts of copper (for instance when z is 0.1 in the compound of formula (I)), the discharge capacity does not deteriorate as fast after several charging cycles, as is observed for the compounds doped with copper known in the art. Such compound thus possesses improved capacity retention rates. In addition, the compound of the invention possesses a high initial coulombic efficiency, in particular higher than 80% at a rate of C/10.

The combination of the above-mentioned advantage - namely a high capacity retention rate, high discharge capacity values and high coulombic efficiency - is particularly beneficial when the compound of the invention is used as cathode in an electrochemical cell, such as a lithium-ion battery.

Thus, in a first aspect, the invention relates to a compound that is a composite oxide of formula (I)

$$Li_aM_{a'}Mn_bNi_xCo_yCu_zO_2 \qquad (I)$$

wherein:

M is selected from Na, Li, K and mixtures thereof;

$$1.05 \leq a+a' \leq 1.30;$$

$$0.55 \leq b \leq 0.70;$$

$$0.15 \leq x \leq 0.30;$$

$$0.025 \leq y \leq 0.125;$$

and

$$0.05 < z \leq 0.125.$$

The compound of the invention is useful as an electrode material, and in particular as cathode material. In a second aspect, the invention relates to the use of the compound according to the first aspect as electrode material.

In a third aspect, the invention relates to the use of the compound according to the first aspect of the invention in the manufacture of an electrode.

In a fourth aspect, the invention relates to a cathode composition comprising the compound according to the first aspect of the invention.

Said cathode compositions are particularly useful as components of electrochemical cells, such as an electrochemical generator or a battery. A fifth aspect of the invention thus relates to an electrochemical cell comprising at least one positive electrode according to the fourth aspect of the invention, at least one negative electrode and an electrolyte.

**BRIEF DESCRIPTION OF THE DRAWINGS**

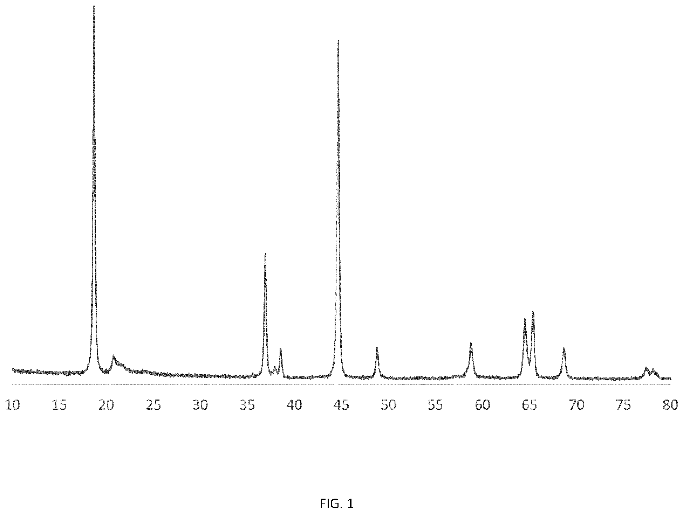

Fig. 1 describes the powder X-Ray diffraction spectrum of the compound of formula (Ia), expressed as peak intensity (in arbitrary units) as a function of the value of 2 theta (expressed in °).

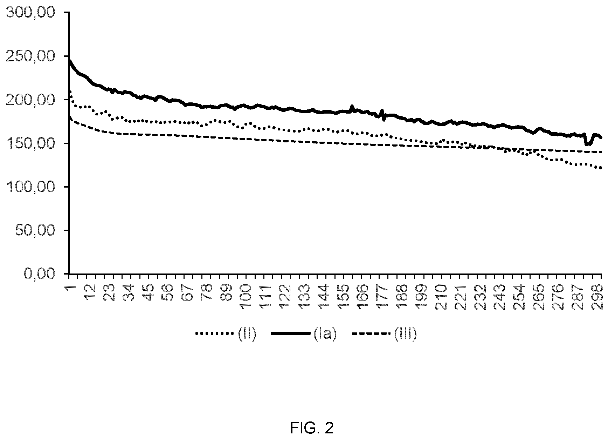

Fig. 2 relates to the Discharge capacity, expressed in mAh per gram, of a cathode comprising the compound of formula (Ia) (plain line) and of a cathode comprising the non-doped compound of formula $Li_{1.15}Mn_{0.7}Ni_{0.2}Co_{0.1}O_2$ (II) (dotted line) and the compound of formula $Li_{1.15}Mn_{0.7}Ni_{0.2}Co_{0.1}Cu_{0.01}O_2$ (III) (dashed line) as a function of the number of charging cycles.

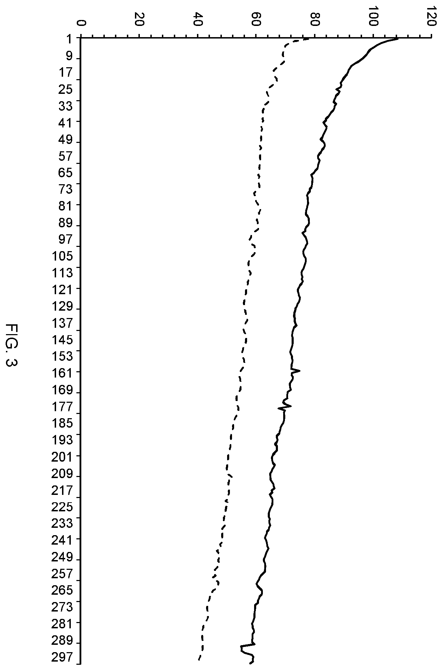

Fig. 3 relates to the energy density, expressed in Wh per kilogram, of a cathode comprising the compound of formula (Ia) (plain line) and of a cathode comprising the non-doped compound of formula $Li_{1.15}Mn_{0.7}Ni_{0.2}Co_{0.1}O_2$ (dashed line) as a function of the number of charging cycles.

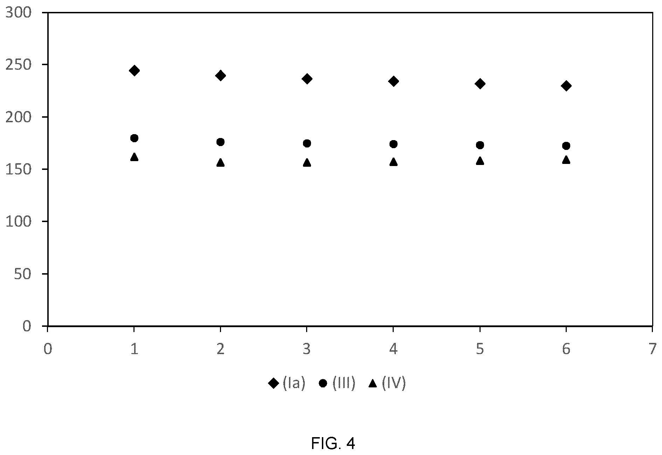

Fig. 4 relates to the Discharge capacity, expressed in mAh per gram, of a cathode comprising the compound of formula (Ia) (diamond symbol) and of a cathode comprising the comparative compounds of formulae (III) and (IV) (circle and triangles symbols, respectively) as a function of the number of charging cycles performed at 1C.

**DETAILED DESCRIPTION**

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio, volume ratio and the like, should be considered approximate (i.e. with a 5% margin of variation around indicated point), unless specifically stated.

In the context of the present invention, the term "discharge capacity", when referring to a cathode material, refers to the power, expressed in mAh per gram of cathode material, provided by the material at a given value of C-rate, also expressed herein as "C".

In the context of the present invention, the term "C-rate", also expressed herein as "C", refers to a measure of the current at which a battery is discharged relative to its maximum capacity. A value of 1C rate refers to a case where the discharge current discharges the electrode in one hour. For instance, for a battery with a capacity of 100

Ah, a C-rate of 1C corresponds to a current of 100 A; and a C-rate of 0.1C corresponds to a current of 10 A. Also, for an electrode material with a capacity of 100 mAh per gram, a C-rate of 1C corresponds to a current of 100 mA per gram; and a C-rate of 0.1C corresponds to a current of 10 mA per gram.

In the context of the present invention, the term "Coulombic Efficiency" refers to the ratio, expressed as a percentage, of the power corresponding to the discharge capacity of an electrode subsequent to a charging process to the power corresponding to the charge capacity of said electrode for said charging process, provided that both charge and discharge are carried out at the same C-rate. Thus, the term "Initial Coulombic Efficiency", also referred to as "ICE" refers to the ratio, expressed as a percentage, of the power corresponding to the discharge capacity of an electrode subsequent to a first charging process to the power corresponding to the charge capacity of said electrode for said first charging process, provided that both charge and discharge are carried out at the same C-rate.

In the context of the invention, the term "capacity retention", or "CR", refers to the ratio, expressed as a percentage, of the discharge capacity of a cathode material measured after a given number of cycles of charge/discharge to the first discharge capacity of the material. Consequently, capacity retention is provided in relation with a number of charging cycles.

As defined above, a first aspect of the invention relates to a compound that is a composite oxide of formula (I) as defined above.

In a preferred embodiment of the first aspect of the invention, M is Na, Li or mixtures thereof. In a more preferred embodiment of the first aspect of the invention, M is Li. When M is Li, the composite oxide of formula (I) is a composite oxide of formula (I')

$$Li_{a+a'}Mn_bNi_xCo_yCu_zO_2 \qquad (I')$$

wherein a+a', b, x, y and z are as defined above and below.

In another preferred embodiment of the first aspect of the invention, the composite oxide of formula (I) is one wherein $1.07 \leq a+a' \leq 1.25$. In another more preferred embodiment of the first aspect of the invention, the composite oxide of formula (I) is one wherein $1.09 \leq a+a' \leq 1.20$. In an even more preferred embodiment of the first aspect of the invention, the composite oxide of formula (I) is one wherein $1.10 \leq a+a' \leq 1.15$. Even more preferably, a+a' is equal to 1.1.

In another preferred embodiment the first aspect of the invention, the composite oxide of formula (I) is one wherein $1.10 \leq a+a' \leq 1.30$.

Thus, in another preferred embodiment of the first aspect of the invention, the composite oxide of formula (I) is one wherein M is Li and $1.09 \leq a+a' \leq 1.20$; more preferably, it is one wherein M is Li and a+a' is equal to 1.10.

In another preferred embodiment of the first aspect of the invention, the composite oxide of formula (I) is one wherein M is Li and $1.10 \leq a+a' \leq 1.30$.

In yet another preferred embodiment of the first aspect of the invention, the composite oxide of formula (I) is one wherein $0.60 \leq b \leq 0.70$. In an even more preferred embodiment of the first aspect of the invention, the composite oxide of formula (I) is one wherein b is equal to 0.65.

Thus, in another preferred embodiment of the first aspect of the invention, the composite oxide of formula (I) is one wherein M is Li and $0.60 \leq b \leq 0.70$.

In a more preferred embodiment of the first aspect of the invention, the composite oxide of formula (I) is one wherein M is Li and b is equal to 0.65.

Thus, in another preferred embodiment of the first aspect of the invention, the composite oxide of formula (I) is one wherein M is Li, $1.09 \leq a+a' \leq 1.20$, and $0.60 \leq b \leq 0.70$.

In another preferred embodiment of the first aspect of the invention, the composite oxide of formula (I) is one wherein M is Li, $1.10 \leq a+a' \leq 1.30$ and $0.60 \leq b \leq 0.70$.

In a more preferred embodiment of the first aspect of the invention, the composite oxide of formula (I) is one wherein M is Li, a+a' is equal to 1.10 and b is equal to 0.65.

In yet another preferred embodiment of the first aspect of the invention, the composite oxide of formula (I) is one wherein $0.18 \leq x \leq 0.25$.

In a more preferred embodiment of the first aspect of the invention, the composite oxide of formula (I) is one wherein x is equal to 0.20.

Thus, in another preferred embodiment of the first aspect of the invention, the composite oxide of formula (I) is one wherein M is Li and $0.18 \leq x \leq 0.25$; preferably one wherein M is Li and x is equal to 0.20.

Thus, in another preferred embodiment of the first aspect of the invention, the composite oxide of formula (I) is one wherein M is Li, $1.09 \leq a+a' \leq 1.20$, $0.60 \leq b \leq 0.70$ and $0.18 \leq x \leq 0.25$.

In another preferred embodiment of the first aspect of the invention, the composite oxide of formula (I) is one wherein M is Li, $1.10 \leq a+a' \leq 1.30$, $0.60 \leq b \leq 0.70$ and $0.18 \leq x \leq 0.25$.

In a more preferred embodiment of the first aspect of the invention, the composite oxide of formula (I) is one wherein M is Li, $a+a'$ is equal to 1.10, b is equal to 0.65 and x is equal to 0.20.

In yet another preferred embodiment of the first aspect of the invention, the composite oxide of formula (I) is one wherein $0.04 \leq y \leq 0.10$.

In a more preferred embodiment of the first aspect of the invention, the composite oxide of formula (I) is one wherein y is equal to 0.07.

Thus, in another preferred embodiment of the first aspect of the invention, the composite oxide of formula (I) is one wherein M is Li and $0.04 \leq y \leq 0.10$; preferably one wherein M is Li and y is equal to 0.07.

Thus, in another preferred embodiment of the first aspect of the invention, the composite oxide of formula (I) is one wherein M is Li, $1.09 \leq a+a' \leq 1.20$, $0.60 \leq b \leq 0.70$, $0.18 \leq x \leq 0.25$ and $0.04 \leq y \leq 0.10$.

In another preferred embodiment of the first aspect of the invention, the composite oxide of formula (I) is one wherein M is Li, $1.10 \leq a+a' \leq 1.30$, and $0.60 \leq b \leq 0.70$, $0.18 \leq x \leq 0.25$ and $0.04 \leq y \leq 0.10$.

In a more preferred embodiment of the first aspect of the invention, the composite oxide of formula (I) is one wherein M is Li, $a+a'$ is equal to 1.10, b is equal to 0.65, x is equal to 0.20 and y is equal to 0.07.

In a more preferred embodiment of the first aspect of the invention, the composite oxide of formula (I) is one wherein z is equal to 0.10.

Thus, in another preferred embodiment of the first aspect of the invention, the composite oxide of formula (I) is one wherein M is Li and $0.05 < z \leq 0.125$; preferably one wherein M is Li and z is equal to 0.10.

Thus, in another preferred embodiment of the first aspect of the invention, the composite oxide of formula (I) is one wherein M is Li, $1.09 \leq a+a' \leq 1.20$, $0.60 \leq b \leq 0.70$, $0.18 \leq x \leq 0.25$, $0.04 \leq y \leq 0.10$ and $0.05 < z \leq 0.125$.

In another preferred embodiment of the first aspect of the invention, the composite oxide of formula (I) is one wherein M is Li, $1.10 \leq a+a' \leq 1.30$, $0.60 \leq b \leq 0.70$, $0.18 \leq x \leq 0.25$, $0.04 \leq y \leq 0.10$ and $0.05 < z \leq 0.125$.

In a more preferred embodiment of the first aspect of the invention, the composite oxide of formula (I) is one wherein M is Li, $a+a'$ is equal to 1.10, b is equal to 0.65, x is equal to 0.20, y is equal to 0.07 and z is equal to 0.10.

Thus, in a more particular embodiment of the first aspect of the invention, the composite oxide is one of formula (Ia)

$$Li_{1.1}Mn_{0.65}Ni_{0.2}Co_{0.07}Cu_{0.1}O_2 \qquad (Ia)$$

In another particular embodiment of the first aspect of the invention, the composite oxide of formula (I) is a composite of a compound of formula $Li_2MnO_3$ with a mixed metal oxide of M, Mn, Ni, Co and Cu.

In such embodiments, it is preferred that the molar fraction of the compound of formula $Li_2MnO_3$ in the composite oxide of formula (I) is smaller than 20% (mol/mol). It is even more preferred that the molar fraction of the compound of formula $Li_2MnO_3$ in the composite oxide of formula (I) is smaller than 15% (mol/mol). In other particular embodiments, the molar fraction of the compound of formula $Li_2MnO_3$ in the composite oxide of formula (I) is of about 10% (mol/mol).

In other particular embodiments of the first aspect of the invention, the composite oxide of formula (I) is characterized in that it exhibits X-ray diffraction peaks at one or more, preferably all, of the 2 theta values selected from the group consisting of 18.68 °, 20.73 °, 36.91 °, 37.86 °, 28.59 °, 44.53 °, 48.81 °, 58.73 °, 64.51 °, 65.38 °, 68.7 °, 77.44 ° and 78.15 °.

In other particular embodiments of the first aspect of the invention, the composite oxide of formula (I) is characterized in that it exhibits the powder X-ray diffraction spectrum shown in Figure 1.

A process for the preparation of a composite oxide of formula (I) is also provided.

Processes for the preparation of such compounds are known in the art and include for instance, hydrothermal methods, sol-gel methods, self-combustion methods and co-precipitation methods. In preferred embodiments, said process is the resorcinol-formaldehyde gel method. This method comprises the steps of:

(i) providing a water solution A of resorcinol, formaldehyde and an alkali carbonate salt, having at least 1 mole of formaldehyde and 1 mole of the alkali carbonate salt per each mole of resorcinol;

(ii) providing a water solution B of salts of lithium, M, manganese, nickel, cobalt and copper; whereby the salts are preferably acetate salts and wherein the Li salt is in an amount of a/b mole of Li per each mole of manganese salt in the solution; the salt of M is in an amount of a'/b mole of M per each mole of manganese salt in the solution; the Ni salt is in an amount of x/b mole of Ni per each mole of manganese salt in the solution; the Co salt is in an amount of y/b mole of Co per each mole of manganese salt in the solution and the Cu salt is in an amount of z/b mole of Cu per each mole of manganese salt in the solution;

(iii) mixing the solution A provided in step (i) with the solution B provided in step (ii);

(iv) polymerizing the resorcinol with the formaldehyde in the mixture resulting from step (iii);

(v) ageing the mixture resulting from step (iv) and

(vi) heating the mixture resulting from step (v) for calcination, preferably at a temperature of 800 °C.

This method of preparation of composite oxides is also referred to in the art as resorcinol-formaldehyde gel technique and is well known in the art, such that the skilled person will know how to reduce it to practice. It has been reported for instance by Xie and co-workers in J. Sol-Gel Sci. Technol. (2016) 77:699-707, p. 701 first paragraph for the preparation of $Li_{1.2}Ni_{0.13}CO_{0.13}Mn_{0.54}O_2$. The process of preparation of the composite of formula (I) described above may thus admit variations that will become apparent to the skilled person. For instance, the skilled person will devise that an alternative to steps (i), (ii) and (iii) is the provision of one solution comprising the same amounts of components of solutions A and B in the same concentrations as this provided by step (iii) described above.

The composite oxide compounds of the first aspect of the invention are particularly useful as cathode materials. In a second aspect, the invention relates to the use of the compound according to the first aspect as electrode material. Such electrode is preferably a cathode; and more preferably a cathode for a battery or an energy storage device.

An embodiment relates to the use of the compound according to the first aspect of the invention in the manufacture of an electrode.

The electrode manufactured is preferably a cathode for use in a battery or an energy storage device. Methods for the manufacture of electrodes are well known in the art and will become apparent to the skilled person. Such methods include for instance the transfer of an ink solution to a carrier suitable as electrode support or current collector, wherein said ink solution comprises the active material of the electrode, such as the composite oxide of formula (I). After the transfer of the ink to the carrier, the solvent of the ink may be dried, thereby providing an electrode.

The above-mentioned transfer step may be carried out by means commonly known in the art such as spray coating, spin coating, dip coating, inkjet printing, solution casting and doctor blade.

The ink solution may be an organic or aqueous mixture comprising, further to the active material of the electrode, a binder and/or a carbonaceous material for conducting electricity, such as carbon black, reduced graphene oxide, carbon nanotubes and graphite. Suitable binders are known in the art and include polyvinylidene fluoride (PVDF), carboxymethyl cellulose, poly(acrylic acid), alginate and poly(tetrafluoroethylene).

A fourth aspect of the invention relates to a cathode composition comprising the compound according to the first aspect of the invention. Said cathode composition may be obtained via a manufacturing process as defined above.

In particular, the cathode of the fourth aspect of the invention comprises a compound of formula (I), more particularly the compound of formula (I') or of formula (Ia), as defined in any of the particular and preferred embodiments defined above for the first aspect. Said composite oxide may be comprised in a composition forming the electrode active material.

In further embodiments of the fourth aspect of the invention, the cathode further comprises a carrier for an electrode or current collector. Said carrier is preferably a support suitable for receiving an active material of an electrode, such as a composition comprising the compound of formula (I), and for acting as current collector. Suitable carriers are known in the art and include, among others, titanium mesh, aluminium foam, titanium foam, steel foam, aluminium foil, titanium foil, carbon paper and carbon cloth. In a particular embodiment of the fourth aspect of the invention, the cathode comprises a carrier that is aluminium foil.

In further embodiments of the fourth aspect of the invention, the cathode further comprises a carbonaceous material for conducting electricity, such as carbon black, reduced graphene oxide, carbon nanotubes or graphite. In a particular embodiment of the fourth aspect of the invention, the cathode comprises a carbonaceous material for conducting electricity that is carbon black such as superconductive carbon black. Said carbonaceous material may be comprised in the composition forming the electrode active material mentioned above.

In further embodiments of the fourth aspect of the invention, the cathode further comprises a binder that is as defined above in the third aspect of the invention. Said binder may be comprised in the composition forming the electrode active material mentioned above. The binder is preferably used for facilitating the adhesion between the active material and the carbonaceous material for conducting electricity, and the adhesion of the electrode material to the current collector.

In further preferred embodiments of the fourth aspect of the invention, the cathode comprises a carbonaceous material, a binder and a composite oxide material according to the first aspect of the invention in a weight ratio of 10:10:80 respectively.

In further embodiments of the fourth aspect of the invention, the cathode is one comprising a carrier and a composition comprising the composite oxide of formula (I) wherein the composition comprising the composite oxide of formula (I) is arranged on the surface of the carrier in a manner suitable for the compound of formula (I) to be exposed to an electrolyte. Such cathodes are particularly useful for use in an electrochemical cell, such as a battery.

A fifth aspect of the invention thus relates to an electrochemical cell comprising at least one positive electrode according to the fourth aspect of the invention, at least one negative electrode and an electrolyte.

In particular embodiments of the fifth aspect of the invention, the cathode is as defined in any of the particular, further and preferred embodiments defined above for the fourth aspect of the invention. In particular, the cathode may comprise a carrier as defined above that receives a composition comprising the composite oxide according to the first aspect of the invention.

In further embodiments of the fifth aspect of the invention, the electrochemical cell comprises an electrolyte that comprises a solid phase, such as a gel, a polymer, a ceramic or a powder.

In further embodiments of the fifth aspect of the invention, the electrochemical cell comprises an electrolyte that comprises a liquid phase, such as a molten salt, an ionic liquid, a solution of a salt in a solvent.

In further embodiments of the fifth aspect of the invention, the electrochemical cell comprises an electrolyte comprising a lithium salt dispersed or dissolved in a matrix. Any suitable combination of lithium salt and matrix known in the art may be used. Said lithium salt may for instance be selected from the group consisting of, but not limited to, lithium lanthanum titanates such as $Li_{0.34}La_{0.51}TiO_{2.94}$, $Li_{0.75}La_{0.5}TiO_3$, $(Li_{0.33}La_{0.56})_{1.005}Ti_{0.99}Al_{0.01}O_3$, lithium aluminium phosphates such as $Li_{1.3}Al_{0.3}Ti_{1.7}(PO_4)_3$, $Li_{1.5}Al_{1.5}Ge_{1.5}(PO_4)_3$, lithium zirconates such as $Li_7La_3Zr_2O_{12}$, $Li_{6.55}La_3Zr_2Ga_{0.15}O_{12}$, $Li_{6.4}La_3Zr_2Al_{0.2}O_{12}$, lithium silicon phosphates such as $Li_{3.25}Si_{0.25}P_{0.75}O_4$, lithium germanates such as $Li_{2.8}Zn_{0.6}GeO_4$, $Li_{3.6}Ge_{0.8}S_{0.2}O_4$, lithium phosphorous oxynitrides such as $Li_{2.9}PO_{3.3}N_{0.46}$, lithium phosphorous sulfides such as $Li_7P_3S_{11}$, $Li_{10}GeP_2S_{12}$, $Li_{3.25}Ge_{0.25}P_{0.75}S_4$, $Li_{3.4}Si_{0.4}P_{0.6}S_4$, $Li_3PS_4$, lithium silicon phosphates such as $Li_{3.5}Si_{0.5}P_{0.5}O_4$, lithium argyrodites such as $Li_6PS_5Br$, $LiPS_5C$, $Li_7PS_6$, $Li_6PS_5I$, $Li_6PO_5Cl$, lithium nitrides such as $Li_3N$, $Li_7PN_4$, $LiSi_2N_3$, lithium imide $Li_2NH$, lithium borohydride $LiBH_4$, lithium aluminium hydride $LiAlH_4$, lithium amides such as $LiNH_2$, $Li_3(NH_2)_2I$, lithium cadmium chloride $Li_2CdCl_4$, lithium magnesium chloride $Li_2MgCl_4$, lithium zinc iodide $Li_2ZnI_4$, lithium cadmium iodide $Li_2CdI_4$, lithium chlorate $LiClO_4$, lithium bis(trifluoromethanesulfonyl)imide $LiC_2F_6NO_4S_2$, lithium hexafluroarsenate $LiAsF_6$, lithium hexaflurophosphate $LiPF_6$, lithium tetrafluoroborate (LIBOB), LIDFTFSI, LiFSI, LiTFSI, lithium nitrate, lithium chlorotrifluoroborate, Lithium fluoride, lithium oxide, lithium peroxide, a salt of formula $LiN(SO_2CF_3)_2$, a salt of formula $LiN(SO_2F)_2$, a salt of formula $LiN(SO_2CF_3)(SO_2F)$, a salt of formula $LiN(SO_2C_2F_5)(SO_2F)$, a salt of formula $LiB(C_2O_4)_2$, a salt of formula $LiBF2(C_2O_4)$, a salt of formula $LiC(SO_2CF_3)_3$, a salt of formula $LiPF_3(C_2F_5)_3$, a salt of formula $LiCF_3SO_3$ and combinations thereof. Said matrix may for instance be selected from the group consisting of, but not limited to, gels, polymers, hydrogels, and solvents known in the art and suitable for forming an electrolyte. More preferably, the matrix is selected from the group consisting of poly(ethylene oxide) (PEO), poly(vinylidene fluoride) (PVDF), polyacrylonitrile (PAN), poly(methyl methacrylate) (PMMA), ethylene carbonate (EC), ethylene methylene carbonate (EMC), diethyl carbonate (DEC), dimethyl carbonate (DMC), propylene carbonate (PC), polyethylene glycol (PEG), glycerol, water and combinations thereof. It is generally preferred that the electrolyte salt is dissolved or dispersed in the matrix at a concentration of between about 0.1 M and 10 M. Said matrix may further comprise one or more plasticizers. Such plasticizers may for instance be selected from the group consisting of, but not limited to, organic solvents, dimethoxy ethane (DME), 1,2-diethoxyethane (DEE), 1,3-dioxolane (DOL), diethylene glycol dimethyl ether (DEGDME), triethylene glycol dimethyl ether (G3), tetraethylene glycol dimethyl ether (TEGDME), poly(ethylene glycol) dimethyl ether (PEGDME), tetrahydropyran (THP), $\gamma$-butyrolactone, tetrahydrofuran (THF), 2-methyltetrahydrofuran, diethylether, methyltert-butylether, succinonitrile (SN), glutaronitrile (GN), adiponitrile (AN), N,Ndimethylsulfamoyl fluoride (FSA), N,N-dimethyltrifluoromethane-sulfonamide (TFSA), tetramethylene sulfone and any mixtures thereof.

In further embodiments of the fifth aspect of the invention, the electrochemical cell comprises an electrolyte comprising an additive for promoting or inhibiting the formation of an interface between the electrolyte and one or both of the cathode and the anode. Said additive may be, for instance, vinylene carbonate (VC), fluoroethylene carbonate (FEC), propylene carbonate, ammonium perfluorocaprylate (APC), vinyl ethylene carbonate (VEC), poly-ether modified siloxanes and combinations thereof.

In further embodiments of the fifth aspect of the invention, the electrochemical cell comprises an electrolyte that is selected from the group consisting of solutions of lithium salts; preferably of solutions of lithium salts in an organic solvent. More particularly, the electrolyte may be an organic solution of one or more lithium salts selected from the group consisting of lithium hexafluorophosphate, lithium tetrafluoroborate lithium perchlorate and mixtures thereof. It is preferred that the lithium salt is lithium hexafluorophosphate.

Said lithium salts may further be dissolved in a solvent selected from the group consisting of ethylene carbonate, dimethyl carbonate, diethyl carbonate, ethyl methyl carbonate, and a mixture thereof. Preferably, the solvent of the electrolyte is a mixture of ethylene carbonate and dimethyl carbonate. More preferably, the solvent of the electrolyte is a mixture of 50 weight% ethylene carbonate and 50 weight% dimethyl carbonate. Even more preferably, the electrolyte is a solution of 1 M concentration of lithium hexafluorophosphate in a mixture of 50 volume% ethylene carbonate and 50 volume% dimethyl carbonate.

In further embodiments of the fifth aspect of the invention, the electrochemical cell comprises an electrolyte that is a solution of 1 M concentration of lithium hexafluorophosphate in a mixture of 50 weight% ethylene carbonate and 50 weight% dimethyl carbonate.

In further embodiments of the fifth aspect of the invention, the electrochemical cell comprises a separator sheet arranged between the positive and negative electrodes of the electrochemical cell and soaked with an electrolyte as defined above in a manner that lithium ions can flow from an electrode to the other. Said separator sheet may be made of glass fibre or any porous inert material or any electrically insulating material, such as polymers with or without ceramic coating, for instance polycarbonate, polyethylene or polypropylene, cellulose based materials such as paper, glass fiber, microporous polymers, for instance microporous polyethylene or microporous polypropylene.

In further embodiments of the fifth aspect of the invention, the electrochemical cell comprises a separator sheet made of glass fibre arranged between the positive and negative electrodes of the electrochemical cell and soaked with a 1 M concentration of lithium hexafluorophosphate in a mixture of 50 weight% ethylene carbonate and 50 weight% dimethyl carbonate. Preferably, the electrochemical cell comprises a separator sheet made of glass fibre arranged between the positive and negative electrodes of the electrochemical cell and soaked with a 1 M concentration of lithium hexafluorophosphate in a mixture of 50 volume% ethylene carbonate and 50 volume% dimethyl carbonate.

In further embodiments of the fifth aspect of the invention, the electrochemical cell comprises a negative electrode comprising a carrier for collecting current and an anodic active material for intercalating alkali cations. Said carrier may preferably be selected from the group consisting of copper mesh, nickel mesh, titanium mesh, titanium foam, copper foam, steel foam, copper foil, titanium foil, carbon paper. The anodic active material may further be a carbonaceous material such as, reduced graphene oxide graphene, synthetic graphite and natural graphite.

In other embodiments of the fifth aspect of the invention, the electrochemical cell is one wherein the negative electrode does not comprise an anodic active material.

In further embodiments of the fifth aspect of the invention, the electrochemical cell is one wherein the anodic active active material is selected from the group consisting of lithium metal, a lithium alloy, a lithium intercalation material, silicon, a silicon alloy, a silicon-based composite, graphite (e.g., artificial graphite, natural graphite), lithium titanium oxide, activated carbon, carbonaceous materials (e.g., nanostructured carbonaceous materials), metal oxides, metal nitrides, metal sulfides, metal phosphides, germanium, tin, phosphorous, antimony, indium, and/or any suitable anode materials known in the art for lithium ion or lithium metal batteries.

In other embodiments of the fifth aspect of the invention, the electrochemical cell is one wherein the negative electrode comprises an anodic active material as defined above that further comprises a doping agent. Such doping agents are known in the art and will become apparent to the skilled person. Those include, for instance, boron, arsenic, phosphorus, gallium, nitrogen or alloys of two or more of Al, Mg, B and Si.

In further embodiments of the fifth aspect of the invention, the electrochemical cell is one wherein the negative electrode comprises an anodic active material that may further be coated. Coatings suitable for such anodic active materials are known in the art and will become apparent to the skilled person. Those include, for instance, $Al_2O_3$, fluorinated graphene (GF), LiF, sulfide-based materials such as $MoS_2$, $Li2_S$, $Li_3PS_4$, lithium metal carbonate (LMC), lithium phosphorous oxynitride (LiPON), lithium phosphorous sulfide ($Li_3PS_4$), lithium phosphide ($Li_3P$), poly(dimethyl siloxane) (PDMS), Poly(vinylidene fluoride) (PVDF), poly(vinylidene fluoride co hexafluoropropylene) (PVDF-HFP), poly(3,4-ethylenedioxythiophene-co-ethylene oxide) (PEDOT), alucone®, poly((N-2,2-dimethyl-1,3-dioxolane-4-methyl)-5-norbornene-exo-2,3-dicarboximide), poly(vinylsulfonylfluoride-ran-2-vinyl-1,3-dioxolane), nafion®, polyacrylonitrile and polyurea.

In other embodiments of the fifth aspect of the invention, the electrochemical cell comprises a negative electrode consisting of metallic lithium or one or more of lithium titanium oxides.

It is preferred that the anode consists of metallic lithium. Such anode comprises lithium for intercalating lithium ions.

The material of the anode for intercalating lithium ions or other metal alkali cations is preferably arranged for being exposed to the electrolyte.

Thus, the fifth aspect of the invention may relate to an electrochemical cell as defined above wherein:

the cathode is as defined in any of the further, particular or preferred embodiments of the fourth aspect of the invention defined above;
the electrochemical cell comprises a separator sheet made of glass fibre arranged between the positive and negative electrodes of the electrochemical cell and soaked with an electrolyte solution of 1 M concentration of lithium hexafluorophosphate in a mixture of 50 weight% ethylene carbonate and 50 weight% dimethyl carbonate or in a mixture of 50 volume% ethylene carbonate and 50 volume% dimethyl carbonate;
the anode consists of metallic lithium; and
the active materials of the cathode and the anode are arranged for being exposed to the electrolyte.

In further embodiments of the fifth aspect, the electrochemical cell is one wherein the cathode satisfies condition (i) and/or condition (ii):

(i) the discharge capacity at 1C for the first cycle is higher than 220 mAh per gram of compound;
(ii) the capacity retention after 300 cycles at 1C is higher than 60%.

In further embodiments of the fifth aspect, the electrochemical cell is one wherein the cathode is such that the discharge capacity at 1C for the first cycle is higher than 230 mAh per gram of compound. In further embodiments of the fifth aspect, the electrochemical cell is one wherein the cathode is such that the discharge capacity at 1C for the first cycle is higher than 240 mAh per gram of compound.

In further embodiments of the fifth aspect, the electrochemical cell is one wherein the cathode is such that the capacity retention after 50 cycles at 1C is higher than 80%. In further embodiments of the fifth aspect, the electrochemical cell is one wherein the cathode is such that the capacity retention after 300 cycles at 1C is higher than 60%.

Throughout the description and claims the word "comprises" and variations of the word, are not intended to exclude other technical features, additives, components or steps. Furthermore, the word "comprise" encompasses the cases of "consist of" and "consists essentially of". Additional objects, advantages and features of the invention will become apparent to those skilled in the art upon examination of the description or may be learned by practice of the invention. The following examples are provided by way of illustration, and they are not intended to be limiting of the present invention.

**EXAMPLES**

*Preparation of lithium-manganese rich nickel manganese cobalt oxide compounds*

General procedure 1: Lithium-manganese rich nickel manganese cobalt copper oxide was synthesized through the resorcinol-formaldehyde gel technique. Firstly, resorcinol (0.1 mol), formaldehyde (0.15 mol) and lithium carbonate (0.003 mol) were dissolved in 10 mL water. Secondly, the amounts of lithium acetate dihydrate, nickel (II) acetate tetrahydrate, manganese (II) acetate tetrahydrate, cobalt (II) acetate tetrahydrate, and copper acetate (II) monohydrate shown in Table 1 were dissolved in 40 mL water and added to the resorcinol-formaldehyde mixture. After polymerization at 60 °C during one hour and ageing for 2 hours at room temperature, the mixture was oven-dried at 90 °C for 12 hours and further heated at 800°C to form the final product.

Following General Procedure 1, the compounds of formulae $Li_{1.15}Mn_{0.7}Ni_{0.2}Co_{0.1}O_2$ (hereinafter, compound of formula (II)) and $Li_{1.1}Mn_{0.65}Ni_{0.2}Co_{0.07}Cu_{0.1}O_2$ (hereinafter and before, compound of formula (Ia)) were prepared, using the amounts of metal acetate salts, expressed in milligrams, indicated in Table 1. The same procedure was used to prepare $Li_{1.15}Mn_{0.7}Ni_{0.2}Co_{0.1}Cu_{0.01}O_2$ (hereinafter compound of formula (III)) and $Li_{1.13}Mn_{0.57}Ni_{0.19}Co_{0.1}Cu_{0.01}O_2$ (hereinafter compound of formula (IV)), using the amounts of metal acetate salts, expressed in milligrams, indicated in Table 2.

Table 1

|  | $Li_{1.1}Mn_{0.65}Ni_{0.2}Co_{0.07}Cu_{0.1}O_2$ | $Li_{1.15}Mn_{0.7}Ni_{0.2}Co_{0.1}O_2$ |
|---|---|---|
| Lithium acetate dihydrate | 2300 | 2300 |
| Manganese (II) acetate tetrahydrate | 3272 | 3272 |
| Nickel (II) acetate tetrahydrate | 818 | 818 |
| Cobalt (II) acetate tetrahydrate | 409 | 819 |
| Copper (II) acetate monohydrate | 328 | 0 |

Table 2

|  | $Li_{1.15}Mn_{0.7}Ni_{0.2}Co_{0.1}Cu_{0.01}O_2$ | $Li_{1.13}Mn_{0.57}Ni_{0.19}Co_{0.1}Cu_{0.01}O_2$ |
|---|---|---|
| Lithium acetate dihydrate | 2300 | 2160 |
| Manganese (II) acetate tetrahydrate | 3272 | 2545 |
| Nickel (II) acetate tetrahydrate | 818 | 861 |
| Cobalt (II) acetate tetrahydrate | 720 | 454 |
| Copper (II) acetate monohydrate | 80 | 36 |

As will be obvious to the skilled person, the compounds of formulae (II), (III) and (IV) fall out of the scope of the invention and are provided as comparative examples.

Structural analysis of materials was performed via X-ray diffraction (XRD) using a Bruker D8 Discover diffractometer with Cu-K$\alpha$ radiation, setting a 2Theta angle range from 10 ° to 80 °, and a step size of 0.02 °. Inductively coupled plasma-optical emission spectroscopy (ICP-OES) was used to elucidate the stoichiometry of the materials disclosed herein, i.e. the values of a+a', b, x, y and z, using a Horiba Ultima 2 in conjunction with an AS500 autosampler. The operating conditions were as follows: 1.0 kW of RF power, 13 L min-1 of a plasma-gas flow rate, 0.2 L min-1 of a sheath-gas flow rate and 0.25 L min-1 of a nebulizer-gas flow rate. Solutions were introduced into the plasma torch using nebulizer and a cyclonic type spray chamber at a flow rate of 0.87 ml /min. The concentrations of the elements (Li, Ni, Mn, Co and Cu) were quantified using four-point external calibration curve within the concentration range of 1-100 mg·L-1.

Figure 1 provides the powder X-Ray diffraction of the compound of formula (Ia). The peaks observed in the region 20-24 ° for 2 theta account for the presence of a monoclinic phase consisting of $Li_2MnO_3$ in the compound of formula (Ia).

*Cathode preparation*

General procedure 2: The compound of formula (Ia) or of formula (II) or of formula (III) or of formula (IV) (80 % w/w) was mixed with Super Conductive Carbon Black (C65) (10% w/w) and polyvinylidene fluoride (PVDF, 10% w/w) binder in N-methyl-2-pyrrolidon to form a slurry, wherein the amount of N-methyl-2-pyrrolidon is of 5 mL per gram of the composition consisting of the compound of formula (Ia) or of formula (II) or of formula (III) or of formula (IV), C65 and PVDF. The slurry was cast on aluminium foil, to provide an electrode precursor. After casting, the electrode precursor was heated at 80 °C for 2 hours. Once dried, electrodes were punched with an area of 1.13 cm$^2$ and the resulting electrode was subsequently dried overnight at 120 °C under vacuum.

Cathode 1 was prepared using the compound of formula (Ia) and following General Procedure 2. Cathode 2 was prepared using the compound of formula (II) and following General Procedure 2. Cathode 2 is provided as a comparative example. Cathode 3 was prepared using the compound of formula (III) and following General Procedure 2. Cathode 3 is provided as a comparative example. Cathode 4 was prepared using the compound of formula (IV) and following General Procedure 2. Cathode 4 is provided as a comparative example.

*Cell assembly*

General procedure 3: CR2032 coin cells were assembled using the prepared Cathode 1 or Cathode 2 or Cathode 3 or Cathode 4 as the working electrode, a disc of metallic lithium as the counter-electrode, and a glass fiber separator (Whatman) soaked with LP30 electrolyte (1M lithium hexafluorophosphate in 1:1 v/v ethylene carbonate : dimethyl carbonate). The cells were assembled in a glovebox under air- and moisture-free conditions ($O_2$ < 0.1 ppm; $H_2O$ < 0.1 ppm).

Cell 1 was prepared using Cathode 1 and following General Procedure 3. Cell 2 was prepared using Cathode 2 and following General Procedure 3. Cell 2 is provided as a comparative example. Cell 3 was prepared using Cathode 3 and following General Procedure 3. Cell 3 is provided as a comparative example. Cell 4 was prepared using Cathode 4 and following General Procedure 3. Cell 4 is provided as a comparative example.

*Electrochemical performance*

The electrochemical properties of the cathode electrodes in Cell 1, Cell 2, Cell 3 and Cell 4 were tested by galvanostatic charge/discharge cycling in a Maccor® battery tester. Stability tests were performed at 1C rate (symmetric charge/discharge, C = 150 mAh/g) in a potential range of 4.8 - 2.2 V.

Figure 2 shows the results obtained for the measurements of the discharge capacity of Cathode 1 in Cell 1, Cathode 2 in Cell 2, and Cathode 3 in Cell 3. While cell 2 comprises the undoped active material of formula (II), the results of figure 2 show that, when a compound such as a compound of formula (II) is doped with copper, the resulting compound of formula (Ia) does not surprisingly lead to a decrease of the discharge capacity. It is unexpected because it is taught in the art that doping with copper of a lithium-rich magnesium rich cathode material provides enhanced stability at the expense of a loss in the discharge capacity, as also shown with the results of Cells 3 and 4 (Figures 2 and 4). Rather surprisingly, Cathode 1 in Cell 1 exhibits a discharge capacity that is higher than Cathode 2 in Cell 2 in average for each of the 300 cycling measurements carried out and higher than Cathode 3 in Cell 3 in average for each of the 300 cycling measurements carried out. Cathode 1 in Cell 1 exhibits a discharge capacity that is also higher than Cathode 3 in Cell 3 and Cathode 4 in Cell 4, which goes against the teachings of the prior art.

Also, remarkably, the capacity retention rate of Cathode 1 in Cell 1 is higher than the one of Cathode 2 in Cell 2 after 300 charging cycles. When the compound of formula (Ia) is used as a cathode material, the discharge capacity of the 300th cycle is 64% the value of the first discharge capacity. In contrast, when the compound of formula (II) is used as a cathode material, the discharge capacity of the 300th cycle is 58% the value of the first discharge capacity. The compound of the invention is advantageously stable upon cycling.

Energy density was calculated for each Cathode 1 and Cathode 2 for each cycle, taking into account all the components of the cathode for the calculation of its mass (current collector, binder, conductive additive and active material). Figure 3 shows the evolution of energy density for each of Cathodes 1 and 2 at different cycles.

The results of Figure 3 show that the energy density of Cathode 1 is in average (i.e. over the 300 cycles) 32% higher than the energy density of Cathode 2 comprising the undoped active material. The active material of Cathode 1, namely the compound of formula (Ia), thus advantageously allows delivering higher energy for the same electrode amount and electrode area, which is of particular interest for use in batteries of electric vehicles or portable devices since battery manufactures are continuously seeking cathode materials able to provide high energy density values.

**Claims**

1. A compound that is a composite oxide of formula (I)

$$Li_aM_{a'}Mn_bNi_xCo_yCu_zO_2 \qquad (I)$$

wherein:

M is selected from Na, Li, K and mixtures thereof;

$$1.05 \leq a+a' \leq 1.30;$$

$$0.55 \leq b \leq 0.70;$$

$$0.15 \leq x \leq 0.30;$$

$$0.025 \leq y \leq 0.125;$$

and

$$0.05 < z \leq 0.125.$$

2. The compound according to claim 1 wherein M is Li.

3. The compound according to any one of claims 1 to 2 wherein a+a' is 1.1.

4. The compound according to any one of claims 1 to 3 wherein b is 0.65.

5. The compound according to any one of claims 1 to 4 wherein x is 0.2.

6. The compound according to any one of claims 1 to 5 wherein y is 0.07.

7. The compound according to any one of claims 1 to 6 wherein z is 0.1.

8. The compound according to any one of claims 1 to 7 that is a composite of a compound of formula $Li_2MnO_3$ with a mixed metal oxide of M, Mn, Ni, Co and Cu.

9. Use of the compound according to any one of claims 1 to 8 as electrode material.

10. A cathode composition comprising the compound according to any one of claims 1 to 8.

11. Electrochemical cell comprising at least one positive electrode according to claim 10, at least one negative electrode and an electrolyte.

12. The electrochemical cell according to claim 11 wherein:

- the electrochemical cell comprises a separator sheet arranged between the positive and negative electrodes of the electrochemical cell and soaked with the electrolyte;
- the negative electrode comprises a carrier for collecting current and an anodic active material for intercalating alkali cations,
- the active material of the cathode and the anode are arranged for being exposed to the electrolyte

and wherein the cathode satisfies conditions (i) and/or (ii):

(i) the discharge capacity at 1C for the first cycle is higher than 220 mAh per gram of compound;
(ii) the capacity retention after 300 cycles at 1C is higher than 60%.

13. The electrochemical cell according to any of claims 11 to 12 wherein the negative electrode consists of metallic lithium.

14. The electrochemical cell according to any of claims 12 to 13 wherein the electrolyte is a solution of one or more lithium salts.

15. The electrochemical cell according to claim 14 wherein the lithium salt is selected from the group consisting of lithium hexafluorophosphate, lithium tetrafluoroborate lithium perchlorate and mixtures thereof and/or the solvent is selected from the group consisting of ethylene carbonate, dimethyl carbonate, diethyl carbonate, ethyl methyl carbonate, and a mixture thereof.


**Patentansprüche**

1. Verbindung, welche ein Oxid-Verbundwerkstoff (composite oxide) der Formel (I) ist

$$Li_aM_{a'}Mn_bNi_xCo_yCu_zO_2 \qquad (I)$$

wobei:
M aus Na, Li, K und Mischungen davon ausgewählt ist;

$$1{,}05 \le a+a' \le 1{,}30;$$

$$0{,}55 \le b \le 0{,}70;$$

$$0{,}15 \le x \le 0{,}30;$$

$$0{,}025 \le y \le 0{,}125;$$

und

$$0{,}05 < z \le 0{,}125.$$

2. Verbindung gemäß Anspruch 1, wobei M Li ist.

3. Verbindung gemäß irgendeinem der Ansprüche 1 bis 2, wobei a+a' 1,1 ist.

4. Verbindung gemäß irgendeinem der Ansprüche 1 bis 3, wobei b 0,65 ist.

5. Verbindung gemäß irgendeinem der Ansprüche 1 bis 4, wobei x 0,2 ist.

6. Verbindung gemäß irgendeinem der Ansprüche 1 bis 5, wobei y 0,07 ist.

7. Verbindung gemäß irgendeinem der Ansprüche 1 bis 6, wobei z 0,1 ist.

8. Verbindung gemäß irgendeinem der Ansprüche 1 bis 7, die ein Oxid-Verbundwerkstoff einer Verbindung der Formel $Li_2MnO_3$ mit einem gemischten Metalloxid aus M, Mn, Ni, Co und Cu ist.

9. Verwendung der Verbindung gemäß irgendeinem der Ansprüche 1 bis 8 als Elektrodenmaterial.

10. Kathodenzusammensetzung, welche die Verbindung gemäß irgendeinem der Ansprüche 1 bis 8 umfasst.

11. Elektrochemische Zelle, umfassend mindestens eine positive Elektrode gemäß Anspruch 10, mindestens eine negative Elektrode und einen Elektrolyten.

12. Elektrochemische Zelle gemäß Anspruch 11, wobei:

- die elektrochemische Zelle eine Trennfolie (separator sheet) umfasst, die zwischen der positiven und der negativen Elektrode der elektrochemischen Zelle angeordnet und mit dem Elektrolyten getränkt ist;
- die negative Elektrode einen Träger zum Sammeln von Strom und ein anodisches aktives Material zum Interkalieren von Alkalikationen umfasst,
- das aktive Material der Kathode und der Anode so angeordnet ist, dass sie dem Elektrolyten ausgesetzt sind

und wobei die Kathode die Bedingungen (i) und/oder (ii) erfüllt:

(i) die Entladekapazität bei 1C für den ersten Zyklus ist höher als 220 mAh pro Gramm der Verbindung;
(ii) die Kapazitätserhaltung nach 300 Zyklen bei 1C ist höher als 60 %.

13. Elektrochemische Zelle gemäß irgendeinem der Ansprüche 11 bis 12, wobei die negative Elektrode aus metallischem Lithium besteht.

14. Elektrochemische Zelle gemäß irgendeinem der Ansprüche 12 bis 13, wobei der Elektrolyt eine Lösung aus einem oder mehreren Lithiumsalzen ist.

15. Elektrochemische Zelle gemäß Anspruch 14, wobei das Lithiumsalz aus der Gruppe ausgewählt ist, die aus Lithiumhexafluorophosphat, Lithiumtetrafluorborat, Lithiumperchlorat und Mischungen davon besteht, und/oder das Lösungsmittel aus der Gruppe ausgewählt ist, die aus Ethylencarbonat, Dimethylcarbonat, Diethylcarbonat, Ethylmethylcarbonat und einer Mischung davon besteht.

**Revendications**

1. Composé qui est un oxyde composite de formule (I)

$$Li_aM_{a'}Mn_bNi_xCO_yCu_zO_2 \qquad (I)$$

dans laquelle :
M est choisi parmi Na, Li, K et des mélanges de ceux-ci,

$$1{,}05 \leq a+a' \leq 1{,}30,$$

$$0{,}55 \leq b \leq 0{,}70,$$

$$0{,}15 \leq x \leq 0{,}30,$$

$$0{,}025 \leq y \leq 0{,}125,$$

et

$$0{,}05 \leq z \leq 0{,}125.$$

**2.** Composé selon la revendication 1, dans lequel M est Li.

**3.** Composé selon l'une quelconque des revendications 1 à 2, dans lequel a+a' vaut 1,1.

**4.** Composé selon l'une quelconque des revendications 1 à 3, dans lequel b vaut 0,65.

**5.** Composé selon l'une quelconque des revendications 1 à 4, dans lequel x vaut 0,2.

**6.** Composé selon l'une quelconque des revendications 1 à 5, dans lequel y vaut 0,07.

**7.** Composé suivant l'une quelconque des revendications 1 à 6, dans lequel z vaut 0,1.

**8.** Composé selon l'une quelconque des revendications 1 à 7, qui est un composite d'un composé de formule $Li_2MnO_3$ avec un oxyde métallique mixte de M, Mn, Ni, Co et Cu.

**9.** Utilisation du composé selon l'une quelconque des revendications 1 à 8 comme matériau d'électrode.

**10.** Composition de cathode comprenant le composé selon l'une quelconque des revendications 1 à 8.

**11.** Cellule électrochimique comprenant au moins une électrode positive selon la revendication 10, au moins une électrode négative et un électrolyte.

**12.** Cellule électrochimique selon la revendication 11, dans laquelle :

- la cellule électrochimique comprend une tôle de séparateur disposée entre les électrodes positive et négative de la cellule électrochimique et imbibée de l'électrolyte,
- l'électrode négative comprend un support pour collecter du courant et une matière active anodique pour l'intercalation de cations alcalins,
- les matières actives de la cathode et de l'anode sont disposées de manière à être exposées à l'électrolyte

et dans laquelle la cathode satisfait aux conditions (i) et/ou (ii):

(i) la capacité de décharge à 1C pour le premier cycle est supérieure à 220 mAh par gramme de composé,
(ii) (ii) la conservation de capacité après 300 cycles à 1C est supérieure à 60 %.

**13.** Cellule électrochimique selon l'une quelconque des revendications 11 à 12, dans laquelle l'électrode négative est constituée de lithium métallique.

**14.** Cellule électrochimique selon l'une quelconque des revendications 12 à 13, dans laquelle l'électrolyte est une solution d'un ou plusieurs sels de lithium.

**15.** Cellule électrochimique selon la revendication 14, dans laquelle le sel de lithium est choisi parmi le groupe constitué d'hexafluorophosphate de lithium, de tétrafluoroborate de lithium, de perchlorate de lithium et de mélanges de ceux-ci et/ou le solvant est choisi parmi le groupe constitué de carbonate d'éthylène, de carbonate de diméthyle, de carbonate de diéthyle, de carbonate d'éthyle et de méthyle et d'un mélange de ceux-ci.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2530767 B1
- CN 1030350900
- CN 103647115

### Non-patent literature cited in the description

- *Mater. Lett.*, 2016, vol. 185, 100-103
- *Dalton Trans.*, 2015, vol. 44, 18624-18631
- *Ceramics International*, vol. 45 (2), 2139-2145
- **MA, Q. ; YIN, S. ; DING F. et al.** Understanding effects of lithium content on structural and electrochemical characteristics of $Li_{1+x}Mn_{0.7}Ni_{0.2}Co_{0.1}O_{2.25+x/2}$ cathode materials for lithium-ion batteries. *Materials Science and Engineering: B*, 2019, vol. 246, 143-152
- **XIE**. *J. Sol-Gel Sci. Technol.*, 2016, vol. 77, 699-707